(19)

Europäisches
Patentamt
European
Patent Office
Office européen
des brevets

(11) **EP 3 792 893 A1**

(12) **EUROPEAN PATENT APPLICATION**
published in accordance with Art. 153(4) EPC

(43) Date of publication:
**17.03.2021  Bulletin 2021/11**

(21) Application number: **18917585.4**

(22) Date of filing: **14.05.2018**

(51) Int Cl.:
***G08G 1/01*** *(2006.01)*   ***G06Q 10/06*** *(2012.01)*
***B60W 50/00*** *(2006.01)*

(86) International application number:
**PCT/CN2018/086638**

(87) International publication number:
**WO 2019/213980 (14.11.2019 Gazette 2019/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **08.05.2018  CN 201810433464**

(71) Applicant: **Tsinghua University**
**Beijing 100084 (CN)**

(72) Inventors:
 • **WANG, Jianqiang**
   **Beijing 100084 (CN)**

 • **HUANG, Heye**
   **Beijing 100084 (CN)**
 • **ZHEGN, Xunjia**
   **Beijing 100084 (CN)**
 • **LI, Keqiang**
   **Beijing 100084 (CN)**
 • **XU, Qing**
   **Beijing 100084 (CN)**

(74) Representative: **Petculescu, Ana-Maria**
**Bayramoglu Law Offices LLC Türkiye**
**Irtibat Ofisi, Mira Office, Kanuni Sultan**
**Süleyman Boulevard, 5387. street**
**Beytepe, floor 12, no:50**
**06800 Cankaya, Ankara (TR)**

(54) **INTELLIGENT VEHICLE SAFETY DECISION-MAKING METHOD EMPLOYING DRIVING SAFETY FIELD**

(57)    The invention discloses a vehicle intelligent safety decision-making method based on a driving safety field, comprising the following steps:
step 1. pre-providing a driving safety field model and a driving risk identification model and a driving safety field model, in an electronic control unit of a vehicle or in a central computer system of a intelligent traffic management system; wherein, the driving safety field model is used to reflect change in traffic risk over time and space, and is established by analyzing the effect of factors of a driver-vehicle-road system on a traffic system;
step 2: using the driving safety field model to acquire a current optimal driving speed of the vehicle and safe distances between the vehicle and objects outside the vehicle when the traffic system is in a steady state; and
step 3: acquiring, according to the current optimal driving speed and the distances obtained in step 2, a minimum value action amount of the driving risk identification model,
using a risk normalized evaluation index to comprehensively describe and quantitatively evaluate dangerous driving situation of the vehicle, and then acquiring a current driving risk level value of the vehicle.

The invention can achieve the safety regulation of the road traffic system, which is beneficial to reduce the incidence of road collision traffic accidents.

EP 3 792 893 A1

Fig. 3

## Description

### Technical Field

The invention relates to traffic safety, in particular to a vehicle intelligent safety decision-making method based on a driving safety field.

### Background of the invention

In recent years, China's economy has developed rapidly, the process of automobileization has also been advancing rapidly, and the number of cars has increased rapidly. At the same time, China's road traffic safety has become increasingly severe. Traditional vehicle decision-making methods during driving are mostly based on the driver's intention recognition, coupled with the relevant constraints of vehicle dynamics or road planning, the factors considered in the decision-making process are insufficient and cannot make correct driving decisions. In the decision-making process, the existing safety decision-making methods and theories usually do not fully consider the role of the driver-vehicle-road system in traffic behavior, especially the lack of attention and research on the psychological characteristics of people (drivers). In addition, the research method is basically at a single correlation level, that is, taking a certain influencing factor as an independent variable, taking the change of vehicle performance index as the target value to reflect vehicle safety, and conventionally directly linking the two factors, so as to analyze the impact of this factor on vehicle safety. The purpose of vehicle decision-making is to ensure driving safety, thereby promoting the safety of the entire transportation system. The safety of the traffic system depends on the coordination between the reliability of the objective safety guarantee and the driver's perception of the performance of such reliable information. That is, the traffic safety is related to the objective safety guarantee and the driver's sense of safety. When the two are coordinated and unified, system traffic safety can be realized. Research on vehicle intelligent safety decision-making methods can effectively promote major changes in the automotive industry. Vehicle safety is the most important goal of intelligence. The quantitative assessment of driving risks and intelligent safety decision-making are the realization of vehicle intelligence such as driving assistance, unmanned driving, and vehicle-road collaboration. However, my country's complex mixed traffic environment urgently needs new automotive intelligent safety theory and methods to break through the development bottleneck in vehicle intelligence.

At present, there have been preliminary results in driving safety control methods for single goals such as vehicle safety control and road safety assessment at home and abroad, but the multi-objective, unified and coordinated driving safety control method that comprehensively considers people, vehicles and roads is still developing.

When analyzing the driver's intelligent and safe decision-making during the driving process, the present invention links the field theory knowledge with the role that the driver receives during the driving process by analyzing the indicators pursued during the driving process. Initially applying the concept of field theory in psychology, Lewin proposed the principle of psychology, which is defined as a psychological field. The field generated by the process of using experienced drivers to quickly identify obstacles, combined with relative speed, road conditions, and self-driving cars State, and then plan a reasonable feasible boundary; the potential energy field method is usually used in path planning in the robot field to realize path planning and dynamic steering control. Arkin RC uses the artificial potential energy field method to achieve indoor path planning and active collision avoidance for mobile robots ; Reichardt D of Daimler-Benz regards the driving environment as a map centered on an autonomous vehicle and treats each coordinate point as a charged particle to study the impact of risks on the movement of smart cars, but the study is simplified The actual environmental factors and ignoring the driver factor; Kitamura Y et al. used artificial potential energy field to study the path planning of automatic aircraft in a 3D environment, and believed that this method can solve the problem of multi-moving bodies; Wolf MT et al. used Tang Chuanshi proposed a highway vehicle collision avoidance algorithm, which uses the idea of electric field to establish the potential energy field generated by the self-car and other cars, and conducts collision avoidance path planning research on the self-car in typical scenarios such as following, overtaking, and congestion. But the scene is simplified to a certain extent, and this algorithm is only effective for specific scenes; Tourveloudis NC et al. installed ultrasonic sensors around the mobile car to perceive the surrounding obstacles and determine the relative importance of the obstacles; Reichardt et al. The electric field model is introduced to study the collision avoidance behavior of dynamic highway unmanned vehicles. Two positive charge models are used to simulate the repulsive state of two vehicles during driving. The electric field force calculation formula is used to calculate the nominal electric field force and applied to the longitudinal and lateral directions. Control model. The whole theory is relatively mature, but the driver's own decision-making is not well considered, and the coupling characteristics in the coordinated environment are ignored. Aiming at the problem that the current traffic safety model cannot fully reflect the risks caused by various traffic elements such as people, cars and roads to the traffic environment, Wang Jianqiang and others proposed the idea of driving risk field. Their model covers the problems of people, cars and roads. There are a large number of parameters, but this model only provides auxiliary decision-making for driving safety, and cannot provide accurate judgment basis for vehicle intelligent safety decision-making evaluation in complex traffic environment.

After the above analysis, when considering making intelligent safety decisions for vehicles, it is necessary to comprehensively consider all influencing factors that affect decision safety. At present, existing studies are relatively scattered when considering the safety factors of vehicle decision-making, mainly for specific scenarios, similar to the driving assistance equipment configured on the car, which deals with the problem alone, but has not yet constituted a system to coordinate the problem solving assembly. However, the one-by-one analysis of a single influencing factor is one-sided to the vehicle's intelligent safety decision-making process and cannot guarantee real-time correct decisions. In actual vehicle driving, how to accurately and quantitatively evaluate the dangerous situation of vehicle driving and timely feedback decision support information is the key to achieving driving safety. Therefore, under the existing traffic control, there is an urgent need for a set of vehicles that comprehensively consider the various elements of the driving environment Intelligent safety decision-making methods can better realize real-time decision-making in the driving process of vehicles, and then guide drivers to drive safely, improve road traffic safety, reduce road traffic accident rates, and improve road traffic environment.

**Summary of the invention**

The invention aims to provide a vehicle intelligent safety decision-making method based on a driving safety field that can provide important means for risk identification and a theoretical method of decision information support for the intelligent management and control of the traffic system.

Therefore, the present invention provides a vehicle intelligent safety decision-making method based on a driving safety field, comprising the following steps:

step 1. pre-providing a driving safety field model and a driving risk identification model and a driving safety field model, in an electronic control unit of a vehicle or in a central computer system of a intelligent traffic management system; wherein, the driving safety field model is used to reflect change in traffic risk over time and space, and is established by analyzing the effect of factors of a driver-vehicle-road system on a traffic system;

step 2: using the driving safety field model to acquire a current optimal driving speed of the vehicle and safe distances between the vehicle and objects outside the vehicle when the traffic system is in a steady state; and

step 3: acquiring, according to the current optimal driving speed and the distances obtained in step 2, a minimum value action amount of the driving risk identification model,

using a risk normalized evaluation index to comprehensively describe and quantitatively evaluate dangerous driving situation of the vehicle, and then acquiring a current driving risk level value of the vehicle.

Preferably, the method for acquiring the "driving risk identification model" in step 1 comprises the following steps:

step 11. establishing a physical model describing the mechanism of driving risk, to obtain conditions of the steady state and unstable state of the traffic system;

step 12. based on the physical model, establishing a vehicle driving action amount model as following:

$$S_{Risk} = \int_{t_1}^{t_2} E_r \, dt = \min \ (\text{low risk} \times \text{short time})$$

wherein, $S_{Risk}$ represents a action amount of the vehicle in a preset traffic process or action amount of all road users, in preset road section managed by the intelligent traffic management system, in the preset traffic process, $t_1$ is start time of the preset traffic process, $t_2$ is end time of the preset traffic process;

step 13: acquiring, according to the vehicle driving action amount model, the driving risk identification model corresponding to driving scene of the traffic system.

Preferably, the "driving safety field model" in step 1 is defined as:

$$U_{ji} = \frac{K \cdot R_i \cdot R_j \cdot M_i \cdot M_j \cdot (1 + DR_i)}{R^{k-1}}$$

$$R_i = m_i gf + m_i gi_\alpha + \frac{C_{Di}A_i}{21.15}\dot{x}_i^2 + \lambda_i m_i \ddot{x}_i$$

$$R_j = m_j gf + m_j gi_\alpha + \frac{C_{Dj}A_j}{21.15}\dot{x}_j^2 + \lambda_j m_j \ddot{x}_j$$

$$M_i = M_i(m_i, T_i, v_i)$$

$$M_j = M_j(m_j, T_j, v_j)$$

wherein, $U_{ji}$ represents potential energy of vehicle i at $(x_i, y_i)$ due to action of vehicle j on it; K > 0 and K is an undetermined constant; $DR_i$ represents the driver's effect factor; $R_i$ represents resistance field of vehicle i caused by rolling resistance, climbing resistance, acceleration resistance, and air resistance; $R_j$ represents the resistance field of vehicle j caused by rolling resistance, climbing resistance, acceleration resistance, and air resistance to vehicle j; $M_i$ represents equivalent mass of vehicle i; $M_j$ represents equivalent mass of vehicle j; mi is the mass of vehicle i; $x_i$ is the longitudinal displacement of vehicle i; $\dot{x}_1$ is the longitudinal velocity of vehicle i; $\ddot{x}_i$ is the longitudinal acceleration of vehicle i; g is acceleration of gravity; f is the rolling resistance coefficient; $i_\alpha$ is gradient; $C_{Di}$ is drag coefficient of vehicle i; $C_{Dj}$ is drag coefficient of vehicle j; $A_i$ is the windward area of vehicle i; $A_j$ is the windward area of vehicle j; $\lambda_i$ is conversion coefficient for rotation mass of vehicle i; $\lambda_j$ is conversion factor for rotation mass of vehicle j; $T_i$ is type of vehicle i; $T_j$ is type of vehicle j; $v_i$ is speed of vehicle i; $v_j$ is speed of vehicle j.

Preferably, step 2 includes: defining $V = \frac{1}{R^k} \cdot M_i \cdot R_i \cdot (1 + DR_i), \quad V' = k_1 \frac{\partial V}{\partial R},$ $\Delta v = v_i - v_j$ then

$$\dot{U}_{ji} = V + k_2 V' = \frac{R + k_1 k_2 \Delta v}{R^{k+1}} \cdot M_i \cdot R_i \cdot (1 + DR_i) \ ,$$

wherein, $\dot{U}_{ji}$ reflects change rate of potential energy over time and space,

k, $k_1$, $k_2$ each is an undetermined parameter, $k_1$ is specifically expressed as the variation coefficient of the field, and $k_2$ is specifically expressed as the variation coefficient of the potential energy over time and space;

defining the "current optimal driving speed " in step 2 as v*, then force acted on the vehicle i running in the traffic system is f(v*);

when the vehicle reaches a steady state and the traffic system is in a steady state, $\dot{U}_{ji} = f(v*)$, namely:

$$\Delta v = \frac{R^{k+1}f(v^*) - R}{k_1 k_2}$$

the traffic system reaches equilibrium when the vehicle speed is constant, at this time, $\Delta v = 0$,

$$\Delta v = \frac{R^{k+1}f(v^*) - R}{k_1 k_2} = 0$$

$$R = \sqrt[k]{\frac{1}{f(v^*)}}$$

in the formula, R represents the safe driving distance between the vehicle and objects outside the vehicle.

Preferably, the "physical model" in step 11 is used for describing the mechanism of driving risk, and method for establishing the physical model is as follows:

in an U-shaped groove, a ball moves along the path of the groove, when the resistance and gravitational force are in balance, the ball is in a steady state; when an obstacle is encountered, the ball will deviate from the safety limit, and the ball is in an unstable state at this time;

the U-shaped groove corresponds to the traffic system, the ball corresponds to the vehicle, and the change in the angle between the U-shaped groove and horizontal reference corresponds to the different needs of the driver for speed, and the conditions of the steady state and the unstable state of the traffic system are expressed as:

When

$$\theta_i < \theta_{limit}, \ \vec{G_i} + \vec{R_c} + \vec{F_i^j} = 0, \ S_{Risk} \le S_{Risk,limit},$$

steady state
when

$$\theta_i > \theta_{limit}, \ \vec{G_i} + \vec{R_c} + \vec{F_i^j} > 0, \ S_{Risk} > S_{Risk,limit},$$

unstable state

$$G_i = m_i g \sin \theta_i$$

$$R_c = R(r, d, v)$$

$$\theta_i = \theta(d)$$

wherein, r is road effect factor; d is driver's effect factor; v is vehicle effect factor; $G_i$ is a high-efficiency driving force, that is, the driving force when the process is completed in pursuit of high speed; $R_c$ is a constraint force to ensure driving safety; $\theta_{limit}$ is a critical angle when maintaining the steady state; $S_{Risk,limit}$ is a limit action when maintaining the steady state; $F_i^j$ is an external force of the traffic system on the movement of the ball; $\theta_i$ is the driver's demand amount on high efficiency, when $G_{\_i}$ and $R_{\_c}$ are balanced, $\theta_{\_i}$ reaches the steady state, and the action amount $S_{Risk}$ at this time takes minimum value.

Preferably, in a free driving scene of a single vehicle, the action amount of the driving risk identification model $S_{Risk}$ is expressed as following,

$$S_{Risk} = \int_{t_0}^{t_f} \left[ \frac{1}{2} m_i \dot{x}_i^2 - \int_{x_0}^{x_f} \left( -m_i g k_i + m_i g f + m_i g i_\alpha + \frac{C_{Di} A_i}{21.15} \dot{x}_i^2 + \lambda_i m_i \ddot{x}_i \right) dx_i \right] dt$$

wherein, $m_i$ is the mass of vehicle i; $k_i$ is the gravitational coefficient of the vehicle i; $x_i$ is the longitudinal displacement of vehicle i; $\dot{x}_1$ is the longitudinal velocity of vehicle i; $\ddot{x}_i$ is the longitudinal acceleration of the vehicle; g is gravitational acceleration; f is the rolling resistance coefficient; $i_\alpha$ is the gradient; $C_{Di}$ is the wind resistance coefficient of the vehicle; $A_i$ is the windward area of the vehicle; $\lambda_i$ is the rotational quality coefficient of the vehicle; $t_0$ is an initial time; $t_f$ is the end time; $x_0$ is the departure point; $x_f$ is the destination,

the step 3 specifically includes:

Step 31: acquiring minimum value $S^*_{Risk}$ of action amount $S_{Risk}$; and

Step 32: in a free driving scene of a single vehicle, when the traffic system reaches a steady state, the vehicle is moving at a constant speed, and the risk is minimal, at this time,

$$v^* = v_{ego};$$

calculating the current driving risk level value $L_{Risk}$ of the vehicle through the following formula:

$$L_{Risk} = 1 - \frac{S^*_{Risk}}{S_{Risk}}.$$

Preferably, in a vehicle following scene, the action amount of the driving risk identification model $S_{Risk}$ is expressed as following,

$$S_{Risk} = \int_{t_0}^{t_f} \left( \frac{1}{2} m_1 \dot{x}_1^2 + \frac{1}{2} m_2 \dot{x}_2^2 - (R - G)(x_1 + x_2) - U_{12} - U_{21} \right) dt$$

wherein, mi is the mass of first vehicle; $m_2$ is the mass of second vehicle; $U_{12}$ is potential energy of the second vehicle under the potential energy field generated by the first vehicle; $U_{21}$ is the potential energy of the first vehicle under the potential energy field generated by the second vehicle; $x_1$ represents longitudinal displacement of the first vehicle, $x_2$ represents longitudinal displacement of the second vehicle, the step 3 specifically includes:

step 31: acquiring minimum value $S^*_{Risk}$ of action amount $S_{Risk}$; and

step 32. in a vehicle following scene, $\Delta v = v_{ego} - v_1$, is always positive, calculating the current driving risk level value $L_{Risk}$ of the vehicle through the following formula:

$$L_{Risk} = 1 - \frac{S^*_{Risk}}{S_{Risk}} \quad .$$

The present invention has the following advantages.

1. The present invention clarifies the interaction between traffic safety influencing factors based on field theory for the first time, reveals the driver-vehicle-road interaction mechanism, and establishes a unified vehicle safety assessment model for comprehensive traffic factors. The risk assessment model of a single influencing factor has its limitations, and the real driving task is in an extremely complex system composed of a person, a vehicle, and the environment inside and outside the vehicle. Therefore, only by considering the coupling relationship between various factors to construct a unified driving safety assessment model can we better make decision support for the intelligent control of traffic environment safety.

2. The present invention changes the focus of previous risk research, distinguishes different types of decision makers and traffic environment object attributes, measures their contribution to the traffic environment, and reveals the objective existence of risks and the mechanism of driving instability. The present invention analyzes the factors that affect the risk effect, and makes a specific risk interpretation of the entire road traffic system from the perspective of field theory, thereby revealing the driver-vehicle-road interaction mechanism and the law of influence of various traffic elements on driving safety. The present invention further studies the relationship between driver manipulation and risk effects, and develops risk assessment algorithms adapted to complex environments.

3. The present invention is based on the principle of minimum action, and reveals the mechanism of driving risk, that is, the fundamental cause of driving risk. The motivation is that the driver's control deviates from the minimum of the product of risk and time. The invention seeks an equilibrium value of high speed and low risk, and provides a decision-making basis for driving safety intelligent control.

**BRIEF DESCRIPTION OF THE DRAWINGS**

Figure 1 is a schematic diagram of the principle of the present invention borrowing from the physical field;

Figure 2 is a schematic diagram of analysis of risk factors in the transportation system of the present invention;

Figure 3 is a schematic diagram of the corresponding relationship between various risks of driving and various fields of the present invention;

Figure 4a is a schematic diagram of the physical model of the present invention in its initial state;

Figure 4b is a schematic diagram of the physical model of the present invention when it is in a steady state;

Figure 4c is a schematic diagram of the physical model of the present invention when instability occurs;

Figure 5 is a schematic diagram of a free driving scene of the present invention and a schematic diagram of field strength distribution of the corresponding driving risk field;

Figure 6 is a schematic diagram of a car following scene and the corresponding field strength distribution of the driving risk field of the present invention;

Figure 7a shows the number of domestic traffic accidents and deaths from 1990 to 2015;

Figure 7b shows the traffic accident mortality rate from 1990 to 2015.

**DETAILED DESCRIPTION OF THE PREFERRED EMBODIMENT**

The present invention will be described in detail below with reference to the drawings and embodiments.

Therefore, the present invention provides a vehicle intelligent safety decision-making method based on a driving safety field, comprising the following steps:
step 1. pre-providing a driving safety field model and a driving risk identification model and a driving safety field model, in an electronic control unit of a vehicle or in a central computer system of a intelligent traffic management system. The driving safety field model is used to reflect change in traffic risk over time and space, and is established by analyzing the effect of factors of a driver-vehicle-road system on a traffic system.

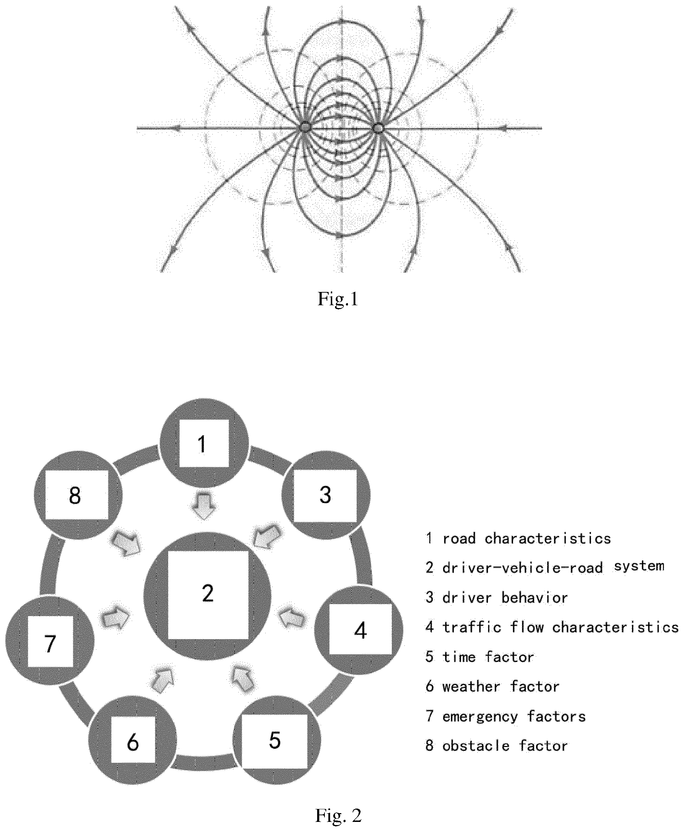

As shown in Fig. 1, The driving safety field defined in the present invention is a basic model based on the physical field, and the driving risk is described on the base of the basic model. The existence of object obstacles leads to the formation of the potential energy field formed by stationary objects on the road, the kinetic energy field formed by moving objects, and the behavior field formed by the drivers. These objects each produces a field range centered on themselves and interfere with other objects. The invention applies the field theory idea in the traffic system. The objective existence of various traffic element risks in the driving safety field corresponds to the objective existence and universality of the physical field. The field in the driving safety field can be characterized as a space-time function, and the physical field also changes with time and space, which is measurable. The risk impact in the driving safety field has a field-like direction.

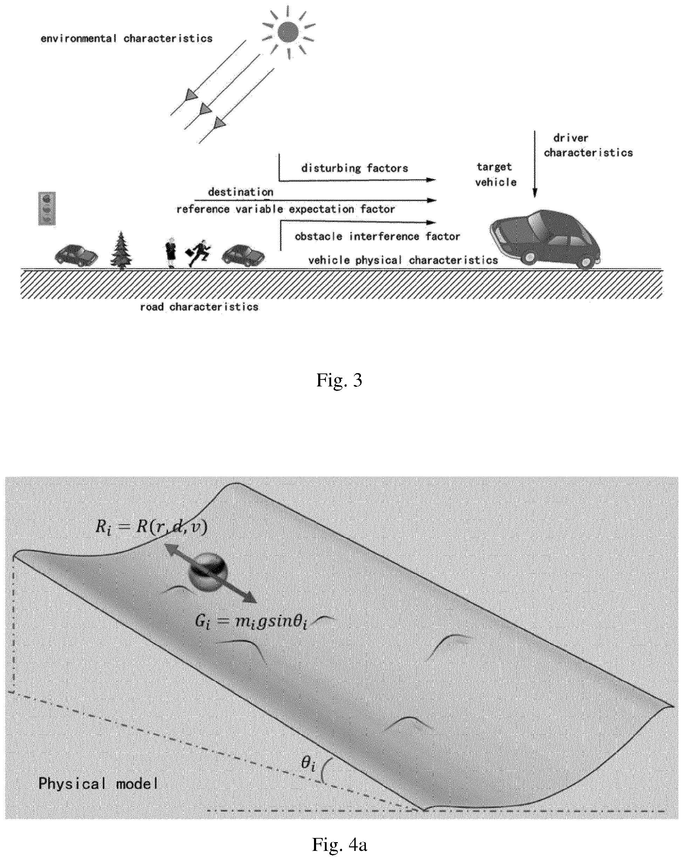

From Figures 2 and 3, it can be concluded that by analyzing the vehicle safety field model and the factors that affect the safety of the traffic system, methods and measures to reduce the probability and severity of accidents are proposed. Associate the safety level of transportation facilities with various risk factors in the driver-vehicle-road-environment system, thereby predicting the safety level under different values and combinations of factors, so as to obtain efficient improvement measures to improve the safety level.

Step 2: using the driving safety field model to acquire a current optimal driving speed of the vehicle and safe distances between the vehicle and objects outside the vehicle when the traffic system is in a steady state.

Step 3: acquiring, according to the current optimal driving speed and the distances obtained in step 2, a minimum value action amount of the driving risk identification model, and using a risk normalized evaluation index to comprehensively describe and quantitatively evaluate dangerous driving situation of the vehicle, and then acquiring a current driving risk level value of the vehicle.

In this embodiment, by analyzing the coupling relationship of various factors of the driver-vehicle-road system and their contribution to the safety of the traffic system, a driving safety field model with dynamic changes in risk is constructed to provide a basis for driving safety decision-making. Based on the principle of least action, the risk normalized evaluation index is used to comprehensively describe and quantitatively evaluate the dangerous driving situation of road vehicles. This embodiment also conducts risk analysis on the current driving of the vehicle to obtain the current driving risk level value of the vehicle. This embodiment realizes the intelligent control of driving operation, and finally achieves the goal of safety regulation of the road traffic system so as to reduce the incidence of road collision traffic accidents.

In an embodiment, the method for acquiring the "driving risk identification model" in step 1 comprises the following steps:

step 11. establishing a physical model describing the mechanism of driving risk, to obtain conditions of the steady state and unstable state of the traffic system. In this step, a "physical model" is used to clarify the mechanism of driving risk in detail, and a physical model is built to visually show the critical threshold when the traffic system is in a steady state and an unstable state.

Step 12. based on the physical model, establishing a vehicle driving action amount model as following:

$$S_{Risk} = \int_{t_1}^{t_2} E_r \, dt = min \ (low \ risk \times short \ time)$$

wherein, $S_{Risk}$ represents a action amount of the vehicle in a preset traffic process or action amount of all road users, in preset road section managed by the intelligent traffic management system, in the preset traffic process, $t_1$ is start time of the preset traffic process, $t_2$ is end time of the preset traffic process.

The "physical model" explains the causes of driving risks. According to the idea of the principle of least action, when the transportation process is realized, there are many ways to choose. Nature always chooses the way that minimizes the product of time and energy. The driving behavior of drivers also pursues speed and safety at the same time, which conforms to the principle of least action. At the same time, it reveals the mechanism of driving risk based on the principle of minimum action. The driver's deviation from the minimum action is the fundamental cause of driving risk. The degree of action deviation from the extreme value determines the magnitude of the driving risk. Based on this idea, the vehicle driving action amount model is established.

Step 13: acquiring, according to the vehicle driving action amount model, the driving risk identification model corresponding to driving scene of the traffic system.

The "driving scene" may be, for example, a "single vehicle free driving scene" or a "vehicle following scene".

In one embodiment, as shown in Figures 2 and 3, to ensure driving safety and intelligently control the traffic system, it is necessary to analyze various factors that affect the traffic system to obtain the interrelationship between the factors. In a complete transportation system, the driving process is mainly related to the characteristics of the driver, the physical characteristics of the vehicle, and the characteristics of the road traffic environment. These characteristics interfere with the entire driving process and lay the foundation for the influencing factors that need to be considered in the subsequent model construction. The main influencing factors can be summarized into the following categories:

a) Driver factor (driver and driving target vehicle), the driver manipulates in the vehicle or interacts with driving assistance devices or semi-autonomous vehicles. Its impact on the traffic system is mainly reflected in the driver's manipulation strategy and Behavior results (target path, keeping lane, following distance, driving speed). Drivers' characteristics are mainly reflected in the various links of the perception-decision-operation mechanism during the driving process. Differences in physiological functions, psychological conditions, habits, etc. of drivers, as well as differences in cognition, processing and driving techniques of traffic information will lead to driving decisions The differences in vehicle control methods are externalized as differences in driving behavior.

b) Factors of road users (motor vehicles, non-motor vehicles, pedestrians, etc.),
The factor of road users is the impact of moving objects in the traffic environment on the entire traffic system. By analyzing the influence of other road users' motion status on the target vehicle, the evolution law of the direction of intelligent safety control can be analyzed;

c) Road environmental factors (road and objective environment)

Road conditions include road adhesion coefficient, road alignment, lane function and location, road facilities, location of traffic signs and markings, etc. The environmental conditions mainly include surrounding environmental conditions, weather conditions, traffic system conditions, etc. Through analysis of them, the contribution of road environmental factors to the traffic environment risk value is highlighted.

This embodiment takes the driving safety field formed by vehicle i as an example for description.

Definition: When a vehicle is driving in a traffic environment, there is a resistance field caused by rolling resistance, climbing assistance, acceleration resistance, and air resistance. The expression of the resistance field can be expressed as:

$$R_i = m_i gf + m_i gi_\alpha + \frac{C_{Di}A_i}{21.15}\dot{x}_i^2 + \lambda_i m_i \ddot{x}_i$$

$$R_j = m_j gf + m_j gi_\alpha + \frac{C_{Dj}A_j}{21.15}\dot{x}_j^2 + \lambda_j m_j \ddot{x}_j$$

For any object that exists in the traffic environment, such as vehicles, pedestrians, non-motor vehicles, etc., the magnitude of the risk to the entire traffic system is related to its quality, type, and its motion state, especially speed. Therefore, the concept of "equivalent quality" is used for reference, namely:

$$M_i = M_i(m_i, T_i, v_i)$$

$$M_j = M_j(m_j, T_j, v_j)$$

Mi represents the equivalent mass of the risk of the object to the driving system in the traffic environment. The greater the mass, the greater the loss that can be caused when the vehicle i collides with the vehicle.

$m_i$ is the actual physical mass of vehicle i, $T_i$ is the type of vehicle i, and $v_i$ is the speed of vehicle i. According to the idea of driving safety field, the field strength generated by moving objects is as follows:

$$\begin{aligned} E_{ji} &= E_{ji}(R_i, M_i, R, v_i) \\ &= \frac{K \cdot R_i \cdot M_i}{R^k} \end{aligned}$$

$$\dot{E}_{ji} = V' = k_1 \frac{\partial V}{\partial R} = k_1 \frac{\partial E_{ji}}{\partial R}$$

Definition: The vehicle has a certain potential energy in the space position under the action of the field force in the driving safety field, which is the safety potential energy. $U_{ji}$ is used to represent the distribution of driving risk in time and space.

When vehicle j is at $r_{ji}$ from vehicle i, or when vehicle i is at $(x_i, y_i)$, the potential energy $U_{ji}$ of vehicle I, due to action of vehicle j, is:

$$U_{ji} = \int_{r_i}^{r_j} F_{ji}dr = \int_0^{r_{ij}} F_{ji}dr = \int_0^{r_{ij}} E_{ji} \cdot M_i \cdot R_i \cdot (1 + DR_i)dr$$

$$= \int_\infty^{r_{ji}} \frac{K \cdot R_i \cdot R_j \cdot M_i \cdot M_j \cdot (1 + DR_i)}{R^k}dr = \frac{K \cdot R_i \cdot R_j \cdot M_i \cdot M_j \cdot (1 + DR_i)}{R^{k-1}}$$

That is, the expression of the "vehicle safety field model" in step 1 is:

$$U_{ji} = \frac{K \cdot R_i \cdot R_j \cdot M_i \cdot M_j \cdot (1 + DR_i)}{R^{k-1}}$$

wherein, Uji represents potential energy of vehicle i at $(x_i, y_i)$ due to action of vehicle j on it. The potential energy is determined by the position $r_{ji}$ of vehicle j relative to vehicle i, which reflects the spatial distribution of driving risk caused by vehicle i. The greater $U_{ji}$ is, the greater the driving risk of vehicle j from vehicle i is.

K > 0 and K is an undetermined constant,and It can be calibrated by using artificial potential energy field.

$DR_i$ represents the driver's effect factor; $R_i$ represents resistance field of vehicle i caused by rolling resistance, climbing resistance, acceleration resistance, and air resistance; $R_j$ represents the resistance field of vehicle j caused by rolling resistance, climbing resistance, acceleration resistance, and air resistance to vehicle j. $M_i$ represents equivalent mass of vehicle i; $M_j$ represents equivalent mass of vehicle j; mi is the mass of vehicle i; $x_i$ is the longitudinal displacement of vehicle i; $\dot{x}_1$ is the longitudinal velocity of vehicle i; $\ddot{x}_i$ is the longitudinal acceleration of vehicle i; g is acceleration of gravity; f is the rolling resistance coefficient; $i_\alpha$ is gradient; $C_{Di}$ is drag coefficient of vehicle i; $C_{Dj}$ is drag coefficient of vehicle j; $A_i$ is the windward area of vehicle i; $A_j$ is the windward area of vehicle j; $\lambda_i$ is conversion coefficient for rotation mass of vehicle i; $\lambda_j$ is conversion factor for rotation mass of vehicle j; $T_i$ is type of vehicle i; $T_j$ is type of vehicle j; $v_i$ is speed of vehicle i; $v_j$ is speed of vehicle j.

It should be noted that: vehicle j is a road user or obstacle other than vehicle i; vehicle i is the current research target vehicle.

Step 2 includes:

defining $V = \frac{1}{R^k} \cdot M_i \cdot R_i \cdot (1 + DR_i), \quad V' = k_1 \frac{\partial V}{\partial R},$ $\Delta v = v_i - v_j$ , then

$$\dot{U}_{ji} = V + k_2 V' = \frac{R + k_1 k_2 \Delta v}{R^{k+1}} \cdot M_i \cdot R_i \cdot (1 + DR_i) \ ,$$

wherein, $\dot{U}_{ji}$ reflects change rate of potential energy over time and space,

k, $k_1$, $k_2$ each is an undetermined parameter, $k_1$ is specifically expressed as the variation coefficient of the field, and $k_2$ is specifically expressed as the variation coefficient of the potential energy over time and space.

defining the "current optimal driving speed " in step 2 as v*, then force acted on the vehicle i running in the traffic system is f(v*);

when the vehicle reaches a steady state and the traffic system is in a steady state, $\dot{U}_{ji}$ = f(v*), namely:

$$\Delta v = \frac{R^{k+1}f(v^*) - R}{k_1 k_2}$$

the traffic system reaches equilibrium when the vehicle speed is constant, at this time, $\Delta v$=0,

$$\Delta v = \frac{R^{k+1}f(v^*) - R}{k_1 k_2} = 0$$

$$R = \sqrt[k]{\frac{1}{f(v^*)}}$$

in the formula, R represents the safe driving distance between the vehicle and objects outside the vehicle.

The mechanism provided in this embodiment lays a theoretical foundation for accurate assessment of driving risks.

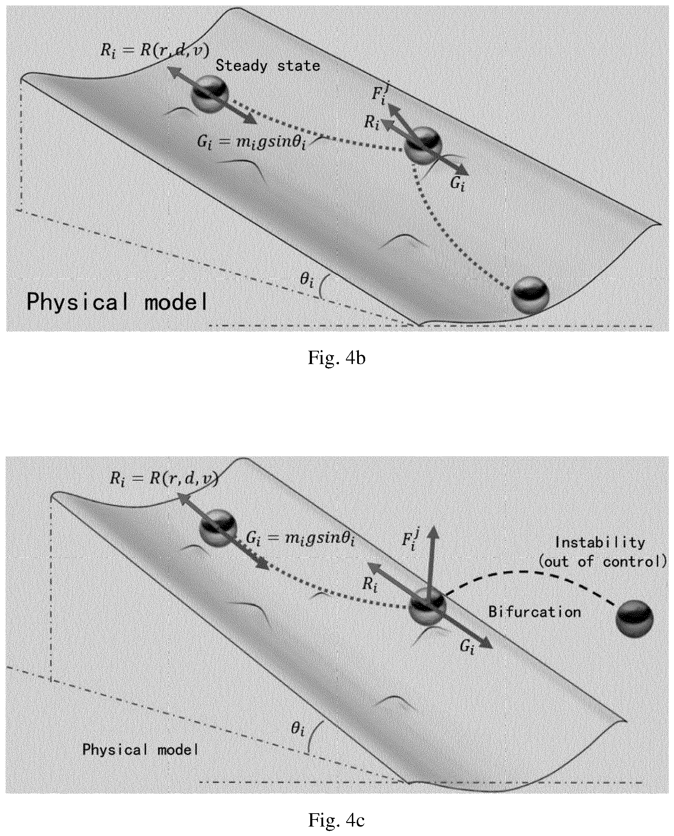

In one embodiment, as shown in FIG. 4, the "physical model" in step 2 is used to perform driving maneuvers in a traffic environment, and to explain the mechanism of driving risk. The method for establishing the physical model as follows:
in an U-shaped groove, a ball moves along the path of the groove as shown in Fig. 4a, when the resistance and gravitational force are in balance, the ball is in a steady state, as shown in Fig. 4b. When an obstacle is encountered, the ball will deviate from the safety limit, and the ball is in an unstable state at this time, as shown in Fig. 4c.

That is to say, in the traffic system, the driver's manipulation process is analogous to a small ball rolling in a U-shaped groove. If the driver's expectation of high efficiency is too large, that is, θ_i is too large, the small ball will cross the safety limit, and the resultant force will There will be unbalanced forces, and the ball is in an unstable state.

The U-shaped groove corresponds to the traffic system, the ball corresponds to the vehicle, and the change in the angle between the U-shaped groove and horizontal reference corresponds to the different needs of the driver for speed, and the conditions of the steady state and the unstable state of the traffic system are expressed as:

When

$$\theta_i < \theta_{limit}, \ \overrightarrow{G_i} + \overrightarrow{R_c} + \overrightarrow{F_i^j} = 0, \ S_{Risk} \le S_{Risk,limit},$$

steady state
when $\theta_i$

$$\theta_i > \theta_{limit} \ , \ \overrightarrow{G_i} + \overrightarrow{R_c} + \overrightarrow{F_i^j} > 0, \ \ S_{Risk} > S_{Risk,limit},$$

unstable state

$$G_i = m_i g \sin\theta_i$$

$$R_c = R(r, d, v)$$

$$\theta_i = \theta(d)$$

wherein, r is road effect factor; d is driver's effect factor; v is vehicle effect factor; $G_i$ is a high-efficiency driving force, that is, the driving force when the process is completed in pursuit of high speed; $R_c$ is a constraint force to ensure driving safety; $\theta_{limit}$ is a critical angle when maintaining the steady state; $S_{Risk,limit}$ is a limit action when maintaining the steady state; $F_i^j$ is an external force of the traffic system on the movement of the ball; $\theta_i$ is the driver's demand amount on high efficiency, when G_i and R_c are balanced, θ_i reaches the steady state, and the action amount $S_{Risk}$ at this time takes minimum value.

$G_i$, $R_i$, etc. all represent the force that the ball i receives during the movement, and other labeled balls such as j can also be added, similar to the traffic system with many cars.

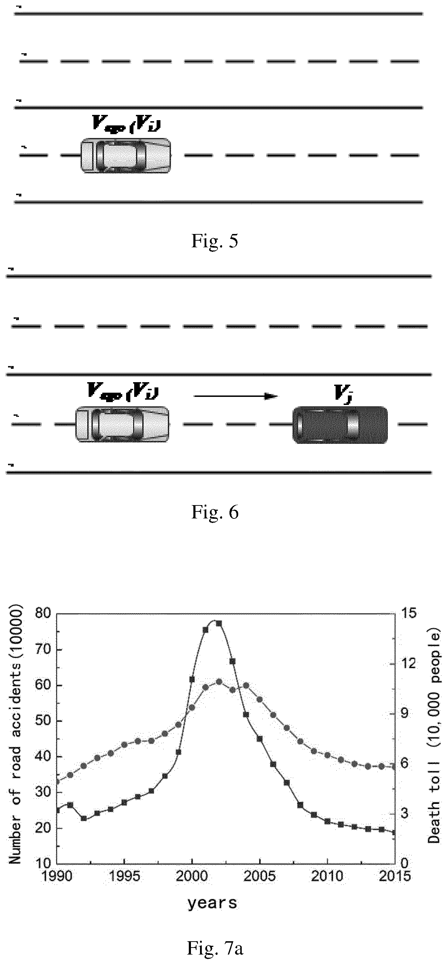

Fig. 5 shows the traffic risk assessment and safety control in a free driving vehicle scene. For a free driving vehicle, when it is in an steady state, according to the characteristics of the traffic system, along the forward direction of the vehicle, in the free driving state, when the traffic system reaches a steady state, the self-vehicle moves at a constant speed, which reaches the optimal state When the risk is minimal, there are:

$$v^* = v_{ego}$$

The Lagrangian equation is established for the traffic system in the free driving state, and no other vehicles affect it in this state. According to the directional flow phenomenon of the traffic system, it is assumed that there is a gravity-like gravitational field $G_i$ along the direction of traffic flow.

The system Lagrangian equation for free driving is:

$$L = T - U = \frac{1}{2}m_i\dot{x}_i^2 - (R_i - G_i)x_i$$

Among them, T represents the total kinetic energy of the system, and U represents the total potential energy of the system.

Considering the influence of lane lines or road boundaries, according to the theory of traffic safety field, the vector field strength $E_{ij}$ at $(x_i, y;)$ of the potential energy field formed by lane line a at $(x_a, y_a)$ can be expressed as:

$$E_{ai} = E_{ai}(LT_a, R_a, D, r_{ai}) = LT_a \cdot R_a \cdot \left(\frac{D}{2} - |r_{ai}|\right)^{k_2} \cdot \frac{r_{ai}}{|r_{ai}|}$$

Among them, $LT_a$ represents the type of lane line a, and its amount is determined by local traffic regulations (for example, the white solid line corresponds to a larger value than the white dashed line), D is the lane width, $r_{ai} = (x_i - x_a, y_i - y_a)$ is the distance vector from the lane line a to the center of mass $(x_i, y_i)$ of the vehicle represented by the white rectangular box in Figure 2, and the range of $|r_{ai}|$ is [0,D/2], The closer the vehicle is to such stationary objects, the greater the restraint potential energy of the vehicle. Then, the field force generated by the lane line can be described as:

$$F_{ai} = E_{ai} \cdot M_i \cdot R_i \cdot (1 + DR_i)$$

Therefore, the Lagrangian equation of a single free driving vehicle traffic system considering lane lines can be expressed as:

$$L = T - U = \frac{1}{2}m_i\dot{x}_i^2 - (R_i - G_i)x_i + \frac{1}{2}m_i\dot{y}_i^2 - \sum_{a=1}^{n}(F_{Di} + F_{ai})y_i$$

wherein, $F_{Di}$ is the generalized force describing the driver's attention, and the closer it is to the lane line, the greater the value. It can be understood that the driver's attention first improves during the lane change process, and after crossing the lane line, the attention returns to the initial level. $F_{Di}$ is related to the behavior of the driver. According to the theory of driving safety field, it can be expressed as:

$$F_{Di} = F_{Di}(DR_c)$$

$$DR_c = \omega_1 \cdot DR_{pp,c} + \omega_2 \cdot DR_{c,c} + \omega_3 \cdot DR_{s,c} + \omega_4 \cdot DR_{v,c}$$

$DR_{pp,c}$ is the risk factor of the driver's physiological and psychological factors, $DR_{c,c}$ is the risk factor of the driver's cognitive level, and $DR_{s,c}$ is the driver's driving skills Risk factor, $DR_{v,c}$ is the risk factor of the driver's driving violation behavior, $\omega_{1\sim}\omega_4$ are the weight coefficients of each factor, and the value of each risk factor and weight coefficient are all in (0,1].

Similarly, if the traffic signs are taken into consideration, let $F_{sign}$ be the resistance of the traffic signs to driving behavior. The resistance is related to the driver's degree of compliance with traffic rules. According to the driving safety field theory:

$$F_{sign} = F_{sign}(DR_{V,C})$$

The forces generated by traffic signs, etc. are integrated into the changes in safety potential energy.

The invention is based on the principle of the least action amount, and uses the risk normalization evaluation index to comprehensively describe and quantitatively evaluate the dangerous driving situation of road vehicles. Moreover, the present invention conducts example analysis on free driving and car following scenes, thereby realizing intelligent control of driving operation, and finally achieving the goal of road traffic system safety regulation and reducing the incidence of road collision accidents.

If traffic risk is regarded as an action quantity, when the optimal state is reached through traffic control, there is bound to be a process that minimizes traffic risk under the premise of high efficiency. According to the Lagrangian equation of the system:

$$L = T - U$$

In the driving safety field theory, the action amount = driving risk × driving time = Risk * $\int_{t_1}^{t_2} dt,$ When the action amount is the smallest, the system traffic risk takes the lowest value, namely:

$$S_{Risk} = S_{Risk}^*$$

The degree of traffic risk is $L_{Risk}$, and is defined as:

$$L_{Risk} = 1 - \frac{S_{Risk}^*}{S_{Risk,t}}$$

$S_{Risk,t}$ represents the amount of action of the traffic system in the real world . When $S_{Risk,t} = S_{Risk}^*$, $S_{Risk,t}$ the degree of traffic risk is minimal, $L_{Risk} = 0$; When $S_{Risk,t}$ is infinite, the degree of traffic risk is the largest, $L_{Risk} = 1$.

Based on the above theory, in a free driving scene of a single vehicle, the expression of the "action amount $S_{Risk}$ of the driving risk identification model" is:

$$S_{Risk} = \int_{t_0}^{t_f} \left[ \frac{1}{2} m_i \dot{x}_i^2 - \int_{x_0}^{x_f} \left( -m_i g k_i + m_i g f + m_i g i_\alpha + \frac{C_{Di} A_i}{21.15} \dot{x}_i^2 + \lambda_i m_i \ddot{x}_i \right) dx_i \right] dt$$

wherein, $m_i$ is the mass of vehicle i; $k_i$ is the gravitational coefficient of the vehicle i; xi is the longitudinal displacement of vehicle i; $\dot{x}_1$ is the longitudinal velocity of vehicle i; $\ddot{x}_i$ is the longitudinal acceleration of the vehicle; g is gravitational acceleration; f is the rolling resistance coefficient; $i_\alpha$ is the gradient; $C_{Di}$ is the wind resistance coefficient of the vehicle; $A_i$ is the windward area of the vehicle; $\lambda_i$ is the rotational quality coefficient of the vehicle; $t_0$ is an initial time; $t_f$ is the end time; $x_0$ is the departure point; $x_f$ is the destination.

The step 3 specifically includes:

Step 31: acquiring minimum value $S_{Risk}^*$ of action amount $S_{Risk}$. Acquiring the minimum value of $S_{Risk}$, that is, acquiring the minimum action amount of the traffic system.

$$\delta S_{Risk} = \frac{\partial}{\partial \alpha} \int_{t_0}^{t_f} L \, dt = 0$$

Step 32: in a free driving scene of a single vehicle, when the traffic system reaches a steady state, the vehicle is moving at a constant speed, and the risk is minimal, at this time,

$$v^* = v_{ego};$$

calculating the current driving risk level value $L_{Risk}$ of the vehicle through the following formula:

$$L_{Risk} = 1 - \frac{S^*_{Risk}}{S_{Risk}}.$$

The driving behavior is adjusted according to the driving risk level value $L_{Risk}$, so as to pursue the optimal driving state.

As shown in Fig.6, in the vehicle-following scene, $\Delta v = v_{ego} - v_1$ is always positive.

$$\dot{U}_{ij} = V + k_2 V' = \frac{R + k_1 k_2 \Delta v}{R^{k+1}} \cdot M_i \cdot R_i \cdot (1 + DR_i)$$

It can be seen from the above formula that when $\Delta v$ increases in a two-vehicles following scene, in order to keep the potential energy change trend between the two vehicles consistent, R also needs to be increased, and in the vehicles scene, $v^* = v_{min}$

The Lagrangian equation of the system at this time is:

$$L = T - U = \sum_1^2 \frac{1}{2} m_i \dot{x}_i^2 - \sum_1^2 (R_i - G_i) x_i + \sum_1^2 \frac{1}{2} m_i \dot{y}_i^2 - \sum_1^2 \sum_{a=1}^2 (F_{Di} + F_{ai}) y_i - U_{12} - U_{21}$$

$U_{12}$ is potential energy of the second vehicle under the potential energy field generated by the first vehicle; $U_{21}$ is the potential energy of the first vehicle under the potential energy field generated by the second vehicle.

If there are n vehicles and b lane boundaries in the traffic environment, L can be described as:

$$L = T - U = \sum_{i=1}^n \frac{1}{2} m_i \dot{x}_i^2 - \sum_{i=1}^n (R_i - G_i) x_i + \sum_{i=1}^n \frac{1}{2} m_i \dot{y}_i^2 - \sum_{i=1}^n \sum_{a=1}^b (F_{Di} + F_{ai}) y_i - \sum_{i \neq j}^n U_{ij}$$

At this time, the action amount of the traffic system in the vehicle following scene is:

$$S_{Risk} = \int_{t_0}^{t_f} L \, dt = \int_{t_0}^{t_f} (T - U) \, dt$$

$$= \int_{t_0}^{t_f} \left( \sum_{i=1}^2 \frac{1}{2} m_i \dot{x}_i^2 - \sum_{i=1}^2 (R - G) x_i + \sum_{i=1}^2 \frac{1}{2} m_i \dot{y}_i^2 - \sum_{i=1}^2 \sum_{a=1}^2 (F_{Di} + F_{ai}) y_i \right.$$

$$\left. - \sum_{i \neq j}^2 U_{ji} \right) dt = \int_{t_0}^{t_f} \left( \frac{1}{2} m_1 \dot{x}_1^2 + \frac{1}{2} m_2 \dot{x}_2^2 - (R - G)(x_1 + x_2) - U_{12} - U_{21} \right) dt$$

further,

$$\delta S_{Risk} = \frac{\partial}{\partial \alpha} \int_{t_0}^{t_f} L \, dt = 0$$

$$L_{Risk} = 1 - \frac{S^*_{Risk}}{S_{Risk,t}}.$$

Therefore, in a vehicle following scene, the action amount of the driving risk identification model $S_{Risk}$ is expressed as following,

$$S_{Risk} = \int_{t_0}^{t_f} \left( \frac{1}{2} m_1 \dot{x}_1^2 + \frac{1}{2} m_2 \dot{x}_2^2 - (R - G)(x_1 + x_2) - U_{12} - U_{21} \right) dt$$

wherein, mi is the mass of first vehicle; $m_2$ is the mass of second vehicle; $U_{12}$ is potential energy of the second vehicle under the potential energy field generated by the first vehicle; $U_{21}$ is the potential energy of the first vehicle under the potential energy field generated by the second vehicle; $x_1$ represents longitudinal displacement of the first vehicle, $x_2$ represents longitudinal displacement of the second vehicle, $k_i$ is the coefficient of gravity.

Step 3 specifically includes:

step 31: acquiring minimum value $S^*_{Risk}$ of action amount $S_{Risk}$; and

step 32. in a vehicle following scene, $\Delta v = v_{ego} - v_1$, is always positive, calculating the current driving risk level value $L_{Risk}$ of the vehicle through the following formula:

$$L_{Risk} = 1 - \frac{S^*_{Risk}}{S_{Risk}} \quad .$$

The driving scenes in the present invention specifically includes the following.

For a single-vehicle free-driving scene, the effect amount is expressed as:

$$S_{Risk} = \int_{t_0}^{t_f} L\, dt = \int_{t_0}^{t_f} (T - U)\, dt = \int_{t_0}^{t_f} \left[ \frac{1}{2} m_i \dot{x}_i^2 - \int_{x_0}^{x_f} (R_i - G_i)\, dx_i \right] dt$$

$$= \int_{t_0}^{t_f} \left[ \frac{1}{2} m_i \dot{x}_i^2 - \int_{x_0}^{x_f} \left( -m_i g k_i + m_i g f + m_i g i_\alpha + \frac{C_{Di} A_i}{21.15} \dot{x}_i^2 + \lambda_i m_i \ddot{x}_i \right) dx_i \right] dt$$

wherein, mi is the mass of vehicle i; $k_i$ is the coefficient of gravity; xi represents longitudinal displacement of vehicle i, $\dot{x}_1$ is the longitudinal velocity of vehicle i; $\ddot{x}_i$ is the longitudinal acceleration of the vehicle; g is the acceleration of gravity; f is the rolling resistance coefficient; $i_\alpha$ is the gradient; $C_{Di}$ is the drag coefficient of the vehicle; $A_i$ is the windward area of the vehicle; $\lambda_i$ is the conversion coefficient of the rotation mass of the vehicle.

It should be noted that in the above parameters, vehicle i is the vehicle platform itself, so $m_i$ is known here; $\dot{x}_i$, $\ddot{x}_i$, $x_i$, steering angle information, and GPS location are all CAN data of the vehicle, and other sensors may collect relative speed, relative displacement between vehicles, position information of other vehicles, etc. The acquisition of these data mainly depends on the vehicle CAN bus, millimeter wave radar, camera, lidar, vision sensor, etc.

f, $i_\alpha$, C $_{Di}$, A$_i$, and $\lambda_i$ can be obtained from the contents of technical manuals or textbooks. k_i is the gravitational coefficient of gravity. Its change has little effect on the trend of the results. It can be calibrated by experimental data. Usually $k_i \in [1,10]$. k, k1, and k2 are undetermined coefficients, and can be calibrated by artificial potential energy field method.

In the above embodiments, the reference coordinate system can be defined as: the x-axis is a horizontal axis parallel to the traveling direction of the own vehicle, the y-axis is a vertical axis perpendicular to the traveling direction of the own vehicle, and the positive direction of the x-axis is the traveling direction of the own vehicle. The coordinates of the own vehicle are (0, 0).

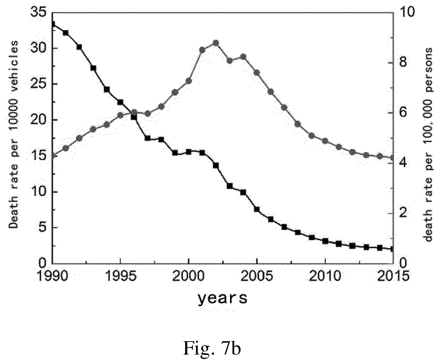

Figure 7a and Figure 7b show China's traffic accident statistics from 1990 to 2015. Figure 7a shows the number of domestic traffic accidents from 1990 to 2015. Figure 7b shows the number of deaths and death rates from 1990 to 2015. It can be seen from the figure that the number of road traffic accidents and fatalities reached the maximum in 2002, and the number of road traffic accidents and deaths decreased sharply until 2008, showing a steady and declining trend. However, the total amount is still high, becoming a major accident threatening national safety. Classify statistics on the factors that cause traffic accidents. Traffic accidents caused by driver errors accounted for 85%-92% of the total number of accidents. Traffic accidents caused by driver factors accounted for 88.23% of total accidents. Traffic accident casualties accounted for 90.6% of the total casualties. Traffic accidents caused by road environmental factors accounted for 8%-11.2%. Therefore, in a road traffic system composed of people, cars, and roads, the car is the core component, the driving behavior of the driver is the core behavior, and the road and the environment are the basic conditions for car driving. Intelligent management and control of the system is an important means to improve traffic efficiency and road traffic system safety.

The road traffic system is a complex dynamic system composed of people, vehicles and roads. In this system, the driver continuously obtains information from the road environment. This information is integrated into the driver's brain, through a complex decision-making process to make judgments and form action instructions. Through the driver's execution of instructions, the car produces corresponding actions on the road. During operation, changes in the running state of the car and the road environment are fed back to the driver as new information, and the cycle repeats to complete the driving task. When there is a problem in the coordination of the transportation system composed of the three elements of people, vehicles and roads, it may cause traffic accidents. The three elements of people, vehicles and roads are indispensable in the traffic system.

The above-mentioned embodiments are only used to illustrate the present invention, in which the various steps of the method can be changed, and all equivalent changes and improvements made on the basis of the technical solution of the present invention fall within the protection scope of the present invention.

**Claims**

1. A vehicle intelligent safety decision-making method based on a driving safety field, comprising the following steps:

   step 1. pre-providing a driving safety field model and a driving risk identification model and a driving safety field model, in an electronic control unit of a vehicle or in a central computer system of a intelligent traffic management system; wherein, the driving safety field model is used to reflect change in traffic risk over time and space, and is established by analyzing the effect of factors of a driver-vehicle-road system on a traffic system;
   step 2: using the driving safety field model to acquire a current optimal driving speed of the vehicle and safe distances between the vehicle and objects outside the vehicle when the traffic system is in a steady state; and
   step 3: acquiring, according to the current optimal driving speed and the distances obtained in step 2, a minimum value action amount of the driving risk identification model,

   using a risk normalized evaluation index to comprehensively describe and quantitatively 27 evaluate dangerous driving situation of the vehicle, and then acquiring a current driving risk level value of the vehicle.

2. The vehicle intelligent safety decision-making method based on the driving safety field according to claim 1, wherein the method for acquiring the "driving risk identification model" in step 1 comprises the following steps:

   step 11. establishing a physical model describing the mechanism of driving risk, to obtain conditions of the steady state and unstable state of the traffic system;
   step 12. based on the physical model, establishing a vehicle driving action amount model as following:

   $$S_{Risk} = \int_{t_1}^{t_2} E_r \, dt = \min \; (\text{low risk} \times \text{short time})$$

   wherein, $S_{Risk}$ represents a action amount of the vehicle in a preset traffic process or action amount of all road users, in preset road section managed by the intelligent traffic management system, in the preset traffic process,
   $t_1$ is start time of the preset traffic process, $t_2$ is end time of the preset traffic process;

   step 13: acquiring, according to the vehicle driving action amount model, the driving risk identification model corresponding to driving scene of the traffic system.

3. The vehicle intelligent safety decision-making method based on the driving safety field of claim 2, wherein the "driving safety field model" is defined as:

$$U_{ji} = \frac{K \cdot R_i \cdot R_j \cdot M_i \cdot M_j \cdot (1 + DR_i)}{R^{k-1}}$$

$$R_i = m_i gf + m_i gi_\alpha + \frac{C_{Di}A_i}{21.15}\dot{x}_i^2 + \lambda_i m_i \ddot{x}_i$$

$$R_j = m_j gf + m_j gi_\alpha + \frac{C_{Dj}A_j}{21.15}\dot{x}_j^2 + \lambda_j m_j \ddot{x}_j$$

$$M_i = M_i(m_i, T_i, v_i)$$

$$M_j = M_j(m_j, T_j, v_j)$$

wherein, $U_{ji}$ represents potential energy of vehicle i at $(x_i, y_i)$ due to action of vehicle j on it; $K > 0$ and K is an undetermined constant; $DR_i$ represents the driver's effect factor; $R_i$ represents resistance field of vehicle i caused by rolling resistance, climbing resistance, acceleration resistance, and air resistance; $R_j$ represents the resistance field of vehicle j caused by rolling resistance, climbing resistance, acceleration resistance, and air resistance to vehicle j; $M_i$ represents equivalent mass of vehicle i; $M_j$ represents equivalent mass of vehicle j; $m_i$ is the mass of vehicle i; $x_i$ is the longitudinal displacement of vehicle i; $x_1$ is the longitudinal velocity of vehicle i; $x_i$ is the longitudinal acceleration of vehicle i; g is acceleration of gravity; f is the rolling resistance coefficient; $i_\alpha$ is gradient; $C_{Di}$ is drag coefficient of vehicle i; $C_{Dj}$ is drag coefficient of vehicle j; $A_i$ is the windward area of vehicle i; $A_j$ is the windward area of vehicle j; $\lambda_i$ is conversion coefficient for rotation mass of vehicle i; $\lambda_j$ is conversion factor for rotation mass of vehicle j; $T_i$ is type of vehicle i; $T_j$ is type of vehicle j; $v_i$ is speed of vehicle i; $v_j$ is speed of vehicle j.

4. The vehicle intelligent safety decision-making method based on the driving safety field of claim 3, **characterized in that**, step 2 includes:

defining $V = \frac{1}{R^k} \cdot M_i \cdot R_i \cdot (1 + DR_i), \quad V' = k_1 \frac{\partial V}{\partial R},$ = $\Delta v = v_i - v_j$, then

$$\dot{U}_{ji} = V + k_2 V' = \frac{R + k_1 k_2 \Delta v}{R^{k+1}} \cdot M_i \cdot R_i \cdot (1 + DR_i) ,$$

wherein, $\dot{U}_{ji}$ reflects change rate of potential energy over time and space,
k, $k_1$, $k_2$ each is an undetermined parameter, $k_1$ is specifically expressed as the variation coefficient of the field, and $k_2$ is specifically expressed as the variation coefficient of the potential energy over time and space;

defining the "current optimal driving speed " in step 2 as v*, then force acted on the vehicle i running in the traffic system is f(v*);
when the vehicle reaches a steady state and the traffic system is in a steady state, $\dot{U}_{ji}$ = f(v*), namely:

$$\Delta v = \frac{R^{k+1}f(v^*) - R}{k_1 k_2}$$

the traffic system reaches equilibrium when the vehicle speed is constant, at this time, $\Delta v = 0$,

$$\Delta v = \frac{R^{k+1}f(v^*) - R}{k_1 k_2} = 0$$

$$R = \sqrt[k]{\dfrac{1}{f(v^*)}}$$

in the formula, R represents the safe driving distance between the vehicle and objects outside the vehicle.

5. The vehicle intelligent safety decision-making method based on the driving safety field as claimed in claim 4, **characterized in that** the "physical model" in step 11 is used for describing the mechanism of driving risk, and method for establishing the physical model is as follows:

in an U-shaped groove, a ball moves along the path of the groove, when the resistance and gravitational force are in balance, the ball is in a steady state; when an obstacle is encountered, the ball will deviate from the safety limit, and the ball is in an unstable state at this time;

the U-shaped groove corresponds to the traffic system, the ball corresponds to the vehicle, and the change in the angle between the U-shaped groove and horizontal reference corresponds to the different needs of the driver for speed, and the conditions of the steady state and the unstable state of the traffic system are expressed as:

When

$$\theta_i < \theta_{limit}, \quad \vec{G_i} + \vec{R_c} + \vec{F_i^j} = 0, \quad S_{Risk} \leq S_{Risk,limit},$$

steady state
when

$$\theta_i > \theta_{limit}, \quad \vec{G_i} + \vec{R_c} + \vec{F_i^j} > 0, \quad S_{Risk} > S_{Risk,limit},$$

unstable state

$$G_i = m_i g \sin\theta_i$$

$$R_c = R(r, d, v)$$

$$\theta_i = \theta(d)$$

wherein, r is road effect factor; d is driver's effect factor; v is vehicle effect factor; $G_i$ is a high-efficiency driving force, that is, the driving force when the process is completed in pursuit of high speed; $R_c$ is a constraint force to ensure driving safety; $\theta_{limit}$ is a critical angle when maintaining the steady state; $S_{Risk,limit}$ is a limit action when maintaining the steady state; $F_i^j$ is an external force of the traffic system on the movement of the ball; $\theta_i$ is the driver's demand amount on high efficiency, when $G_i$ and $R_c$ are balanced, $\theta_i$ reaches the steady state, and the action amount $S_{Risk}$ at this time takes minimum value.

6. The vehicle intelligent safety decision-making method based on the driving safety field of any one of claims 1 to 5, **characterized in that**, in a free driving scene of a single vehicle, the action amount of the driving risk identification model $S_{Risk}$ is expressed as following,

$$S_{Risk} = \int_{t_0}^{t_f} \left[ \frac{1}{2} m_i \dot{x}_i^2 - \int_{x_0}^{x_f} \left( -m_i g k_i + m_i g f + m_i g i_\alpha + \frac{C_{Di} A_i}{21.15} \dot{x}_i^2 + \lambda_i m_i \ddot{x}_i \right) dx_i \right] dt$$

wherein, $m_i$ is the mass of vehicle i; $k_i$ is the gravitational coefficient of the vehicle i; $x_i$ is the longitudinal displacement of vehicle i; $\dot{x}_1$ is the longitudinal velocity of vehicle i; $\ddot{x}_i$ is the longitudinal acceleration of the vehicle; g is gravitational acceleration; f is the rolling resistance coefficient; $i_\alpha$ is the gradient; $C_{Di}$ is the wind resistance coefficient of the vehicle; $A_i$ is the windward area of the vehicle; $\lambda_i$ is the rotational quality coefficient of the vehicle; to is an initial time; $t_f$ is the end time; $x_0$ is the departure point; $x_f$ is the destination,
the step 3 specifically includes:

Step 31: acquiring minimum value $S_{Risk}^*$ of action amount $S_{Risk}$; and

Step 32: in a free driving scene of a single vehicle, when the traffic system reaches a steady state, the vehicle is moving at a constant speed, and the risk is minimal, at this time,

$$v^* = v_{ego};$$

calculating the current driving risk level value $L_{Risk}$ of the vehicle through the following formula:

$$L_{Risk} = 1 - \frac{S_{Risk}^*}{S_{Risk}}.$$

7. The vehicle intelligent safety decision-making method based on the driving safety field of any one of claims 1 to 5, **characterized in that**, in a vehicle following scene, the action amount of the driving risk identification model $S_{Risk}$ is expressed as following,

$$S_{Risk} = \int_{t_0}^{t_f} \left( \frac{1}{2} m_1 \dot{x}_1^2 + \frac{1}{2} m_2 \dot{x}_2^2 - (R - G)(x_1 + x_2) - U_{12} - U_{21} \right) dt$$

wherein, $m_1$ is the mass of first vehicle; $m_2$ is the mass of second vehicle; $U_{12}$ is potential energy of the second vehicle under the potential energy field generated by the first vehicle; $U_{21}$ is the potential energy of the first vehicle under the potential energy field generated by the second vehicle; $x_1$ represents longitudinal displacement of the first vehicle, $x_2$ represents longitudinal displacement of the second vehicle,
the step 3 specifically includes:

step 31: acquiring minimum value $S_{Risk}$ of action amount $S_{Risk}$; and
step 32. in a vehicle following scene, $\Delta v = v_{ego} - v_1$, is always positive, calculating the current driving risk level value $L_{Risk}$ of the vehicle through the following formula:

$$L_{Risk} = 1 - \frac{S_{Risk}^*}{S_{Risk}} \quad .$$

Fig.1

1 road characteristics

2 driver-vehicle-road system

3 driver behavior

4 traffic flow characteristics

5 time factor

6 weather factor

7 emergency factors

8 obstacle factor

Fig. 2

Fig. 3

Fig. 4a

Fig. 4b

Fig. 4c

Fig. 5

Fig. 6

Fig. 7a

Fig. 7b

## INTERNATIONAL SEARCH REPORT

| | International application No. |
|---|---|
| | **PCT/CN2018/086638** |

**A.    CLASSIFICATION OF SUBJECT MATTER**

G08G 1/01(2006.01)i;  G06Q 10/06(2012.01)i;  B60W 50/00(2006.01)i

According to International Patent Classification (IPC) or to both national classification and IPC

**B.    FIELDS SEARCHED**

Minimum documentation searched (classification system followed by classification symbols)

G08G; G06Q10/06; B60W

Documentation searched other than minimum documentation to the extent that such documents are included in the fields searched

Electronic data base consulted during the international search (name of data base and, where practicable, search terms used)

WPI, EPODOC, CNKI, CNPAT: 王建强, 安全, 车辆, 模型, 距离, 智能; risk, safety, vehicle, driving, security

**C.    DOCUMENTS CONSIDERED TO BE RELEVANT**

| Category* | Citation of document, with indication, where appropriate, of the relevant passages | Relevant to claim No. |
|---|---|---|
| Y | CN 107738644 A (CHANG"AN UNIVERSITY) 27 February 2018 (2018-02-27) description, paragraphs 63-69 | 1 |
| Y | 王建强 等 (WANG, Jianqiang et al.). "基于人-车-路协同的行车风险场概念、 原理及建模 (Concept, Principle and Modeling of Driving Risk Field Based on Driver-Vehicle-Road Interaction)" 中国公路学报 (China Journal of Highway and Transport), Vol. 29, No. (1), 31 January 2016 (2016-01-31), ISSN: 1001-7372, abstract, page 106, right-hand column, paragraph 3 to page 107, left-hand column, last paragraph | 1 |
| A | CN 107103185 A (JIANGSU UNIVERSITY) 29 August 2017 (2017-08-29) entire document | 1-7 |
| A | CN 107487257 A (HEFEI GUANGZHAO INFORMATION TECHNOLOGY CO., LTD.) 19 December 2017 (2017-12-19) entire document | 1-7 |
| A | CN 107215331 A (BEIJING YANGPUWEIYE TECHNOLOGY DEVELOPMENT CO., LTD.) 29 September 2017 (2017-09-29) entire document | 1-7 |

☑ Further documents are listed in the continuation of Box C.   ☑ See patent family annex.

| | |
|---|---|
| *    Special categories of cited documents: | "T" later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X" document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O"  document referring to an oral disclosure, use, exhibition or other means | "&" document member of the same patent family |
| "P"  document published prior to the international filing date but later than the priority date claimed | |

| Date of the actual completion of the international search | Date of mailing of the international search report |
|---|---|
| **18 January 2019** | **11 February 2019** |

| Name and mailing address of the ISA/CN | Authorized officer |
|---|---|
| **State Intellectual Property Office of the P. R. China** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2018/086638**

**C.    DOCUMENTS CONSIDERED TO BE RELEVANT**

| Category* | Citation of document, with indication, where appropriate, of the relevant passages | Relevant to claim No. |
|---|---|---|
| A | CN 107389076 A (LANZHOU JIAOTONG UNIVERSITY) 24 November 2017 (2017-11-24) entire document | 1-7 |
| A | DE 102015015259 A1 (DAIMLER A.G.) 12 May 2016 (2016-05-12) entire document | 1-7 |

Form PCT/ISA/210 (second sheet) (January 2015)

**INTERNATIONAL SEARCH REPORT**
Information on patent family members

| International application No. |
| --- |
| **PCT/CN2018/086638** |

| Patent document cited in search report | | | Publication date (day/month/year) | Patent family member(s) | Publication date (day/month/year) |
| --- | --- | --- | --- | --- | --- |
| CN | 107738644 | A | 27 February 2018 | None | |
| CN | 107103185 | A | 29 August 2017 | None | |
| CN | 107487257 | A | 19 December 2017 | None | |
| CN | 107215331 | A | 29 September 2017 | None | |
| CN | 107389076 | A | 24 November 2017 | None | |
| DE | 102015015259 | A1 | 12 May 2016 | None | |

Form PCT/ISA/210 (patent family annex) (January 2015)